# EUROPEAN PATENT SPECIFICATION

(11) **EP 2 136 118 B1**
(45) Date of publication and mention of the grant of the patent: **01.07.2015**
(21) Application number: 09153805.8
(22) Date of filing: 26.02.2009
(51) Int. Cl.: F16L 5/10, G02B 6/44

(54) **Device for sealing cables through containers for optical fibres and container comprising said device**
Vorrichtung zum Abdichten von Kabeln durch Behälter für Glasfaser und Behälter mit solch einer Vorrichtung
Dispositif de scellage de câbles dans des conteneurs pour fibres optiques et conteneur comportant ce dispositif

(30) Priority: 16.06.2008 IT MI20081082
(43) Date of publication of application: 23.12.2009
(73) Proprietor: Optotec S.p.A., 20024 Garbagnate Milanese (MI) (IT)
(72) Inventor: Pensato, Tommaso, 21040 Gerenzano (Varese) (IT)
(74) Representative: Tansini, Elio Fabrizio

(56) References cited:
- EP-A- 0 681 135
- DE-A1- 19 735 347
- US-A1- 2006 063 418
- US-A1- 2006 261 560

## Description

The present invention relates to a container for optical fibres.

The present invention falls within the field of the installations used in telecommunications networks, since the optical fibre is a propagation guide with excellent light transmission features.

At each node of the optical network, i.e. at each point where the fibre cable is interrupted to be connected to another cable, it is necessary to strip the cable (removal of the outer sheath, possible metal armour, fillers, tubes, aramidic fibres, etc.) over a length that can even reach some metres and separate the individual fibres or fibre assemblies so as to select those that must be cut and spliced to the other cable. The stripped spliced region, i.e. the region remaining uncovered, is handled and protected inside suitable containers the task of which is to restore a protection degree of the fibres at least as high as that that was ensured by the unimpaired or intact cable. In protected environments (indoor) containers having a low protection degree (bosses, boxes, subframes, for example) are used, while in unprotected environments (outdoor) containers with a high protection degree are employed, usually sealingly closed containers, known in the specific field as "sealing boxes".

A sealing box is known for example from document EP0827596 and comprises a base body provided with inlets for the cables, a frame provided with boards for handling the fibres and a cap mounted on the base. The base body is formed with a first plate and a second plate that are moved close to each other so as to compress a sealing ring which, being radially deformed, exerts a sealing action on the cap of the sealing box. The inlets are further provided with seals capable of sealing the base on the cables and with devices for locking both the cable sheath and the central stiff element of said cables (usually a cylinder made of plastic reinforced by fibre glass). To this aim, each locking device comprises a cylindrical element mounted on the base body at a respective inlet/outlet and provided with presser elements that radially enclose the cable, and with arms the ends of which are adapted to lock the central stiff element of the cable.

Document EP 0 681 135 discloses a device for passing conduits such as tubes, cables or similar, through an opening in a wall, such as brick or concrete, which accommodates the conduits and against which it is sealable. It has a sealing body arranged in the conduit longitudinal direction between two pressure discs. On one of the pressure discs at least one clamp part activated by pressure is arranged, which is adjustably located on a slide surface. The slide surface runs inclinedly to the conduit longitudinal direction, so that the clamp part is adjusted outwards against the inner facing of the wall opening.

Document US 2006/0063418 discloses a fitting for a liquid-tight cable leadthrough in an opening in a solid surface, which solid surface can be gripped from the back, wherein said fitting comprises an upper boundary plate that covers the opening, an elastic moulded element that flatly contacts and is connected to the upper boundary plate and can be at least partially inserted into the opening, a lower boundary plate that can be lead through the opening, wherein the lower boundary plate flatly contacts and is connected to the elastic moulded element on the opposite side of the elastic moulded element referred to the upper boundary plate, a locking plate that can be moved relative to the lower boundary plate and is providable with at least two pivoted locking elements.

US20060261560 discloses a container comprising a base, a duct, a cap, a frame, a sealing device, a support frame, first and second compression elements, a deformable element; a passage, means for moving, and coupling means.

The Applicant has noticed that the sealing and locking devices of known type like those described above are structurally complicated and of difficult installation and dismantling, so that all the operations required for bringing the cables into the sealing box and handling the optical fibres inside it are made very complex. Due to this complexity, the devices are also expensive.

The Applicant has further noticed that the sealing and locking devices of known type do not enable the stripped ends of the cables to be positioned in a steady and accurate manner within the sealing box, so as to allow the fibres forming them to be correctly handled, in particular routed in a precise manner onto the respective storage and/or junction boards.

The present invention aims at solving the problems encountered in the known art by proposing a device for sealing cables through containers for optical fibres that is simple, cheap and of easy installation/dismantling.

Another aim of the present invention is to provide a device for sealing cables through containers for optical fibres enabling the stripped cable ends to be installed in the sealing box at precise positions, so as to facilitate handling of the fibres inside said sealing box.

The foregoing and further aims that will become more apparent in the course of the following description are substantially achieved by a container for optical fibres as hereinbelow described and claimed.

In more detail, in a first aspect, the present invention relates to a container as claimed in claim 1.

In a further aspect, the present invention relates to a process as claimed in claim 12.

In a still further aspect, the invention relates to a process as claimed in claim 13.

The present invention can also have one or more of the preferred features as disclosed in claims 2 to 11.

Moreover, preferably, the device has a plurality of passages disposed around the rod.

Preferably, the deformable element, first compression element and second compression element have a circular cross section and a plurality of passages for the cables disposed in a circular path.

Preferably, the support frame comprises locking means for a tensioning element of each cable; said locking means comprises a plurality of seats disposed around the rod and each in alignment with a respective passage along directions parallel to the predetermined direction.

Preferably, the locking means also comprises screws or dowels engaged in said seats.

Preferably, the rod comprises a fixed portion bearing the distal end and a screw aligned with the fixed portion, engaged in said fixed portion and defining a proximal end of said rod; the fixed portion and the screw also defining the means for moving the first compression element close to the second compression element.

Preferably, the deformable element, first compression element and second compression element have a hole for passage of the rod of non-circular cross section and a fixed portion of the rod carrying the distal end is engaged in the hole and has a cross-section the shape of which matches that of said hole.

Preferably, the first compression element for each of the passages comprises a lug integral with said first compression element and having a retaining surface substantially facing an opening of said passage on said first compression element, to prevent further insertion of the cable into the container.

Preferably, the deformable element, first compression element and second compression element have an oval-shaped cross section and two passages for the cables.

Preferably, the support frame comprises locking means for a tensioning element of each cable; said locking means comprising a plurality of clamps disposed on the plate.

Preferably, the deformable element is made of rubber, preferably silicone rubber.

Preferably, the device is rigidly linked to the container frame by said coupling means located at the distal end of the support frame of said device.

Preferably, the container frame comprises plates mounted on the base and having means for engagement with the coupling means of the support frame.

Preferably, the inlet/outlet duct is of circular section.

Preferably, the inlet/outlet duct is of oval section.

The structure of the device of the invention allows the container to be sealed in a safe and simple manner in the passage regions of the cables. In fact, the device is merely inserted into the respective duct of the container and secured to the frame of the container itself, by screws for example.

Therefore use of heat-shrinkable sheaths is avoided, which sheaths require heat sources for activation, and therefore cannot be always used (for instance in closed environments with possible presence of explosive gases). Furthermore, the solution being the object of the invention allows a plurality of cables of reduced sizes and provided with plastic coatings to be installed as well, which cables would be damaged by the heat necessary for setting up said heat-shrinkable sheaths.

The solution being the object of the invention further ensures steady and accurate positioning of the stripped portions of the cables inside the container, so that the fibres can be correctly routed on the respective handling boards and are not subjected to stresses and deformations, in particular during maintenance interventions. In fact, the device according to the invention ensures axial locking of the cables, preventing them from accidentally being pulled out of the container or further inserted thereinto and therefore bent.

Further features and advantages will become more apparent from the detailed description of a preferred but not exclusive embodiment of a device and a container in accordance with the present invention.

This description will be set out hereinafter with reference to the accompanying drawings, given by way of non-limiting example, in which:
- Fig. 1 is a perspective cut away view of a container for optical fibres, with some elements removed for a better view of others, provided with two devices in accordance with the invention;
- Fig. 2 is a perspective view of a first embodiment of a device for sealing cables through containers for optical fibres in accordance with the invention;
- Fig. 2a is an enlarged view of a portion of the device seen in Fig. 2;
- Fig. 3 is a cut away view of the device in Fig. 2;
- Fig. 4 is a perspective view of a second embodiment of a device for sealing cables through containers for optical fibres in accordance with the invention;
- Fig. 5 is a cut away view of the device in Fig. 4; and
- Fig. 6 shows an element of the device seen in Figs. 4 and 5.

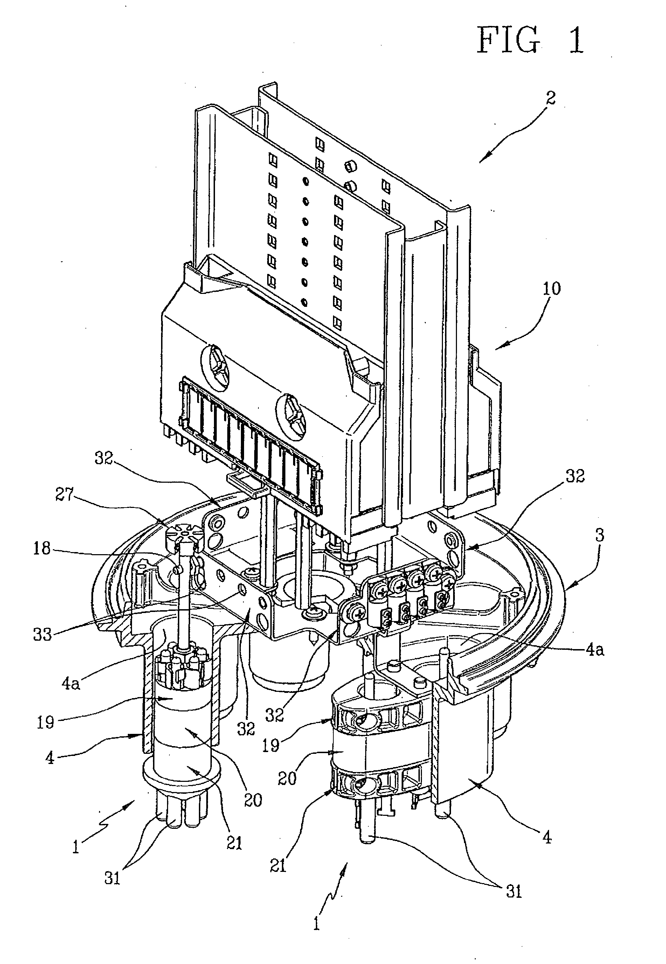

In accordance with the present invention it is described a device 1 for sealing cables through containers for optical fibres and a container 2 comprising such a device 1. As shown in Fig. 1, container 2 comprises a first device 1 according with a first embodiment and a second device 1 according to a second embodiment.

Container 2 comprises a base 3 provided with at least one inlet/outlet duct 4 through which one or more optical-fibre cables 5 (not shown in Fig. 1) are passed.

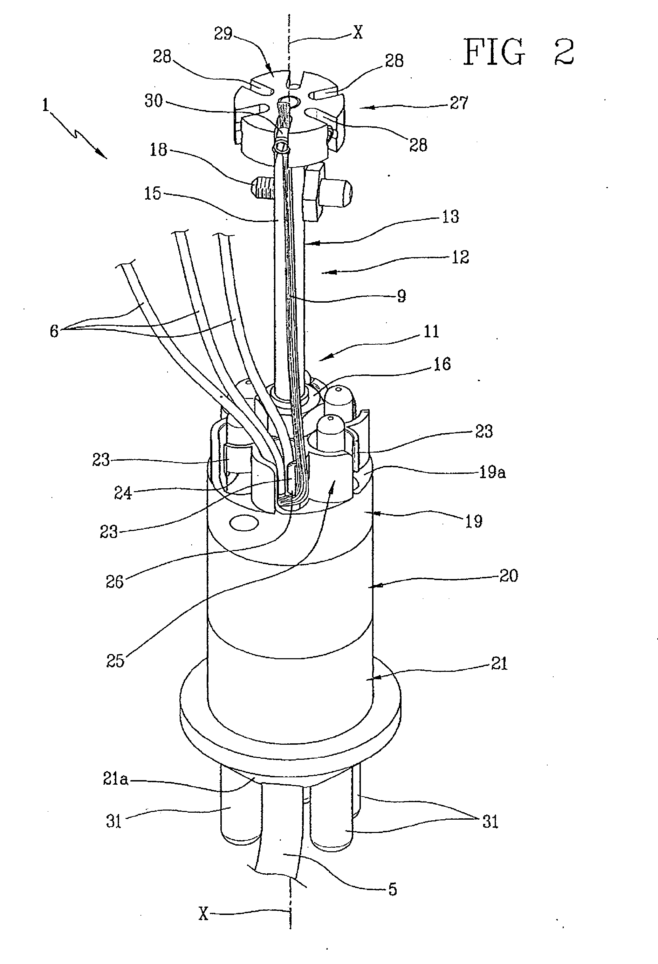

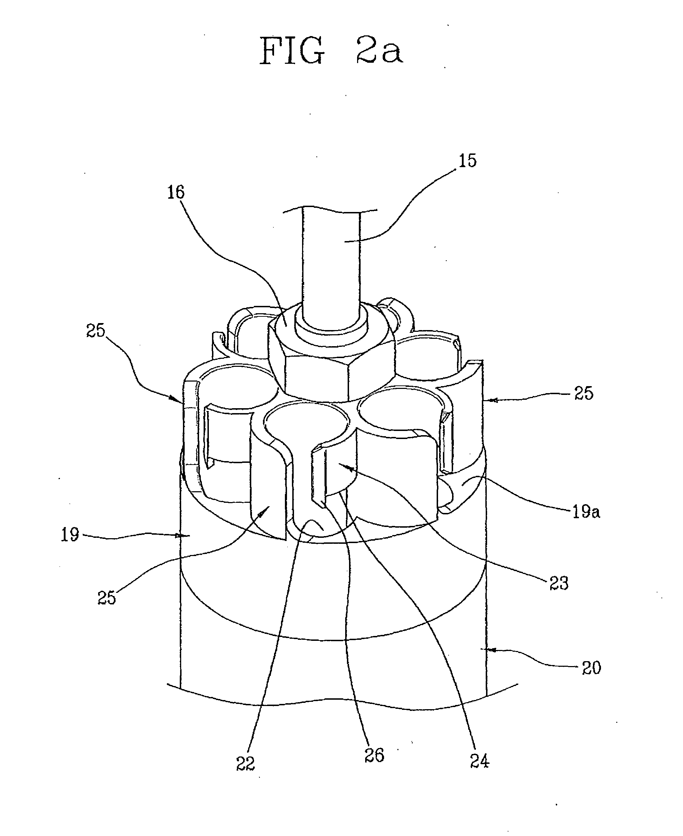

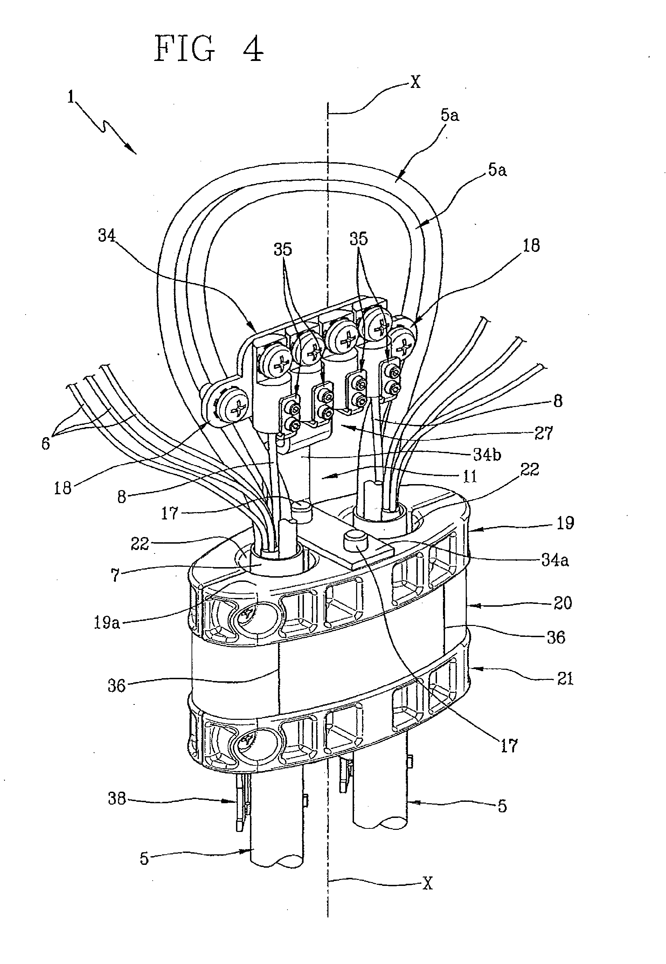

As shown in Figs. 2 and 4, each cable 5 comprises a plurality of optical fibres organised in one or more tubes 6 for fibre transport, in turn surrounded by an outer sheath 7 (better viewed in Fig. 4) for protection and associated with tensioning elements 8, 9 and fillers carrying out mechanical protection of the cable (tractive and compressive stresses, etc.)

The tensioning elements 8, 9 can be of the stiff type 8 (Fig. 4) such as a central cylinder made of plastic reinforced by fibre glass for example, or of the flexible type 9 (Fig. 2), such as aramidic yarns (Kevlar) surrounding the inner elements (tubes, fibres) of cable 5.

There are cables 5 of big sizes containing a great number of fibres (96 to 144 fibres, for example) and comprising both the central stiff tensioning element 8 and the aramidic yarns 9, as well as cables of smaller sizes (containing 2 to 24 fibres), sometimes coming from a cable of big sizes, which are devoid of the central element 8 and only provided with said aramidic yarns 9.

Container 2 further comprises a frame 10 mounted on base 3 and usually provided with a plurality of boards, of known type and not shown, designed to receive the individual fibres or fibre assemblies to enable correct handling of same (storage or execution of splicing operations, for example).

A cap, of known type and not shown, is mounted on base 3 so as to close and insulate frame 10 with the boards from the surrounding atmosphere.

One or more of said cables 5 are passed through one or more devices 1, as detailed in the following, each of said devices 1 in turn being installed inside a respective inlet/outlet duct 4, so as to seal the opening thereof.

Shown in Fig. 1 is an inlet/outlet duct 4 of circular section inside which a device 1 according to the first embodiment is housed, as well as an inlet/outlet duct 4 of oval section inside which a device 1 according to the second embodiment is housed.

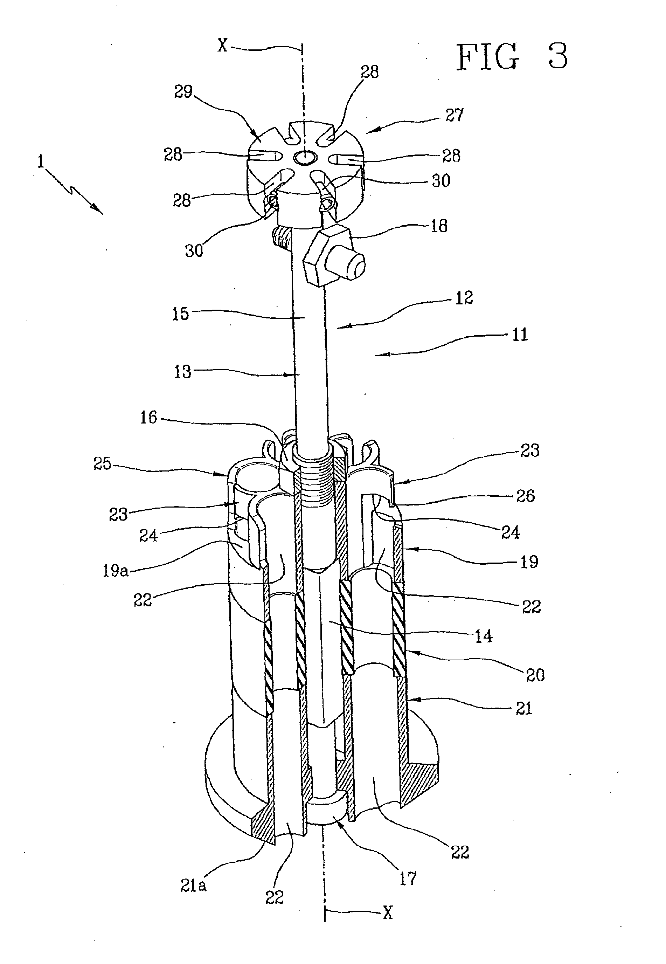

In accordance with the first embodiment, shown in more detail in Figs. 2 and 3, device 1 comprises a support frame 11 defined by a rod 12 extending along a predetermined direction "X-X". Rod 12 comprises a fixed portion 13 designed to be locked on frame 10 of container 2. The fixed portion 13 has a first length 14 of non-circular section, preferably of square section, separated from a second length 15 of any section and preferably of circular section, by a retaining element 16, a nut for example. One end of the fixed portion 13 belonging to the first length 14 has a threaded hole receiving the shank of a screw 17 being part of rod 12 and defining a proximal end of said rod 12 (Fig. 3). A distal end of rod 12, opposite to the proximal one, has coupling means 18 to rigidly connect device 1 to container 2, which coupling means in the first embodiment is defined in a non-limiting sense by a screw passing through the second length 15.

Device 1 further comprises a first compression element 19 defined by a substantially cylindrical body at least partly fitted on the first length 14 of rod 12 and positioned against the retaining element 16. To this aim, the first compression element 19 has an axial hole of non-circular, preferably square, section the shape of which at all events matches that of the section of the first length 14.

Also fitted on the first length 14 is a deformable element 20, of cylindrical form too and provided with an axial hole the shape of which matches that of the section of the first length 14, which element 20 bears against the first compression element 19. The deformable element 20 is preferably made of rubber, preferably silicone rubber, and performs the function of a seal ensuring imperviousness, as described in the following.

At least partly fitted on the first length 14 of rod 12 is a second compression element 21, of substantially cylindrical shape as well. The screw 17 being part of rod 12 is inserted in the axial hole of said second compression element 21, the shape of which too matches that of the section of the first length 14. The head of screw 17 lies in abutment against a head portion of the second compression element 21, so as to retain said second compression element 21 on the rod 12 itself.

Due to the non-circular shape of part of rod 12 and of the axial holes into which said rod is inserted, the deformable element 20, first compression element 19 and second compression element 21 are restrained from rotating about rod 12.

Therefore, the deformable element 20 remains between the two compression elements 19, 21, and screwing down of screw 17 into the threaded hole belonging to the first length 14 mutually approaches the two compression elements 19, 21 pressing the deformable element 20 between them and deforming it. The fixed portion 13 and screw 17 therefore define means for moving the first compression element 19 close to the second compression element 21.

Passages 22 are formed through the first compression element 19, the second compression element 21 and the deformable element 20, each of them passing through the first 19 and second 21 compression elements and the deformable element 20 (Fig. 3) and being designed to receive an optical fibre cable 5.

In more detail, the first compression element 19 has a plurality of passages, each extending along a direction parallel to the predetermined direction "X-X" and open on both faces of the substantially cylindrical body. The passages are disposed around the hole receiving rod 12 and are preferably located on a circular path. The same number of passages are formed through the second compression element 21 and the deformable element 20 so that, when device 1 is assembled, the homologous passages are mutually aligned and bring one face 21a of the second compression element 21 opposite to the deformable element 20 into communication with one face 19a of the first compression element 19 opposite to said deformable element 20.

The first compression element 19 further has one lug 23 at each of the openings of passages 22 facing the distal end of rod 12, which lug has the function of locking cable 5 in its axial insertion movement into container 2. To this aim, lug 23 has a retaining surface 24 closely spaced apart from and substantially facing the opening of the respective passage 22.

In more detail (Fig. 2a), substantially tubular bodies 25 are present on the face 19a of the first compression element 19 opposite to the deformable element 20, each of them extending from one of said passages 22 and having an L-shaped slot on each of its side walls. The horizontal portion of the L-shaped slot is confined on one side by said face 19a of the first compression element 19 opposite to the deformable element 20 and on the other side by the retaining surface 24. Each lug 23 further has a tailpiece 26 extending at a right angle from the retaining surface 24 towards said face 19a and performing the function of a hook, as detailed in the following.

The distal end of rod 12 further has means 27 for locking a tensioning element 8, 9 of cable 5. Preferably, said locking means 27 has a plurality of seats 28 disposed around rod 12 and each aligned with a respective passage 22 along a respective direction parallel to the predetermined direction "X-X".

In the embodiment shown, seats 28 are defined by radial cuts executed in a cylindrical body 29 mounted at the top of the distal end and coaxial with rod 12. Each of the radial cuts 28 extends along the whole thickness of said cylindrical body 29 and has a radial threading receiving a respective screw or a respective dowel 30. Screwing down of dowel 30 causes moving forward of same towards a radially internal surface of the respective seat 28.

Device 1 further comprises removable plugs 31 (Figs. 1 and 2), which are inserted in the unused passages 22, i.e. when there are no cables 5 passing through said passages.

In use, after opening an inlet/outlet duct 4 of circular section, the device 1 according to the first embodiment is inserted in said duct 4 until bringing the deformable element 20 into contact with an inner wall 4a of duct 4 and bringing the distal end of rod 12, with the coupling means 18, close to plates 32 mounted in an integral manner on base 3 also carrying frame 10 of container 2.

The device 1 is rigidly linked to container 2 by screwing down the screw being part of the coupling means 18 in a hole formed in one of said plates 32 and defining the engagement means 33.

Depending on the number of cables 5 to be inserted, a corresponding number of plugs 31 is removed. The cables 5 to be inserted in device 1 according to the first embodiment are those defined of smaller sizes (containing 2 to 24 fibres), devoid of the central stiff element 8 and only provided with said aramidic yarns 9.

An end portion of each cable 5 is threaded into one of passages 22 through the second compression element 21, the deformable element 20 and the first compression element 19 until it comes out close to frame 10 of container 2.

The end portion of cable 5, over a length suitable for the operations to be carried out, is stripped off, i.e. the outer sheath is removed and the tubes of the optical fibres are separated from the flexible tensioning elements 9. The flexible fibres 9 are gathered in a single strip which is subsequently passed through the L-shaped slot of the respective tubular body 25 and threaded under lug 23 against the retaining surface 24. Strip 9 is then locked in the respective seat 28 by passing it between dowel 30 and the radially internal surface of the respective seat 28 and screwing down the dowel 30 itself (Fig. 2). In this configuration, strip 9 remains taut between lug 23 and seat 28 and the tailpiece 26 prevents strip 9 partly disposed around lug 23 from being drawn out from underneath the lug 23 itself.

Lug 23 prevents cable 5 from being further introduced into container 2 and the locking means 27 prevents the cable 5 itself from being pulled out of container 2. Each cable 5 is therefore axially locked.

When locking has been completed, the optical fibres are suitably disposed on the boards or stored in suitable spaces in container 2 and sealing is carried out through device 1. To this aim, screw 17 of rod 12 working as a tie-rod, is screwed down so that the first and second compression elements 19, 21 are mutually approached and the deformable element 20 is radially deformed. Radial deformation of the deformable element 20 gives rise to a radial bulging of the element 20 itself, which by its outer side surface exerts a sealing action against the inner wall 4a of duct 4 and by the inner surfaces of its passages exerts a sealing action against cables 5 and plugs 31. The cap, not shown, is finally sealingly mounted on base 3.

In accordance with the second embodiment of device 1, shown in more detail in Figs. 4, 5 and 6, the support frame 11 again extends along a predetermined direction "X-X" but, instead of rod 12, it comprises a plate 34 that at a distal end thereof carries the coupling means 18 and locking means 27.

Device 1 in accordance with the second embodiment is preferably designed to receive the cables 5 of bigger sizes, provided with stiff tensioning elements 8 and intended for fibre splitting, which operation will be described in the following.

To this aim, the first compression element 19, deformable element 20 and second compression element 21 have an oval section and two passages 22 alone for cables 5, and housing in an inlet/outlet oval duct 4 of base 3 of container 2 is therefore provided (Fig. 1).

In more detail, the support frame 11 comprises a pair of screws 17 fitted in respective holes through the first compression element 19, the deformable element 20 and the second compression element 21. The head of each screw 17 lays against the second compression element 21 while a distal end of the screw 17 itself is coupled to a first portion 34a of the plate 34 associated with a face 19a of the first compression element 19 facing away from the deformable element 20.

Tightening of screws 17 causes deformation of the deformable element 20 in the same manner as in the first embodiment of device 1.

Plate 34 further has a second portion 34b extending at a right angle from the first portion 34a and carrying the coupling means 18 and locking means 27 at its distal end. The locking means 27 is defined by clamps 35 each having an entrance facing passages 22. In the embodiment shown, device 1 has four clamps 35 disposed in side by side relationship and screwed down on plate 34. Each clamp comprises a tightening small plate to be driven by means of dowels or screws.

The coupling means 18 comprises a pair of screws inserted through plate 34 at the sides of clamps 35.

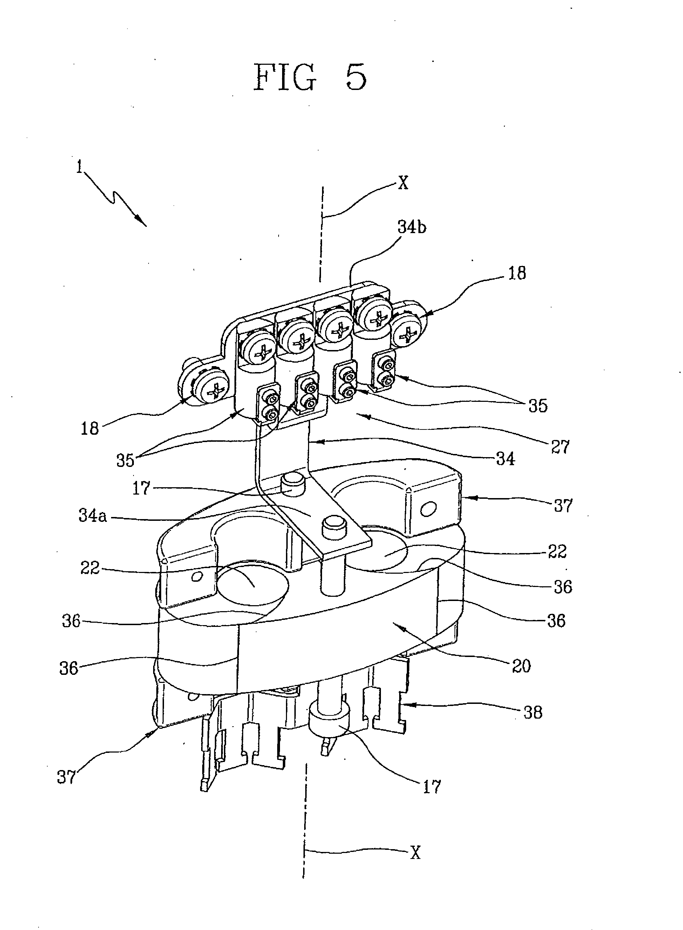

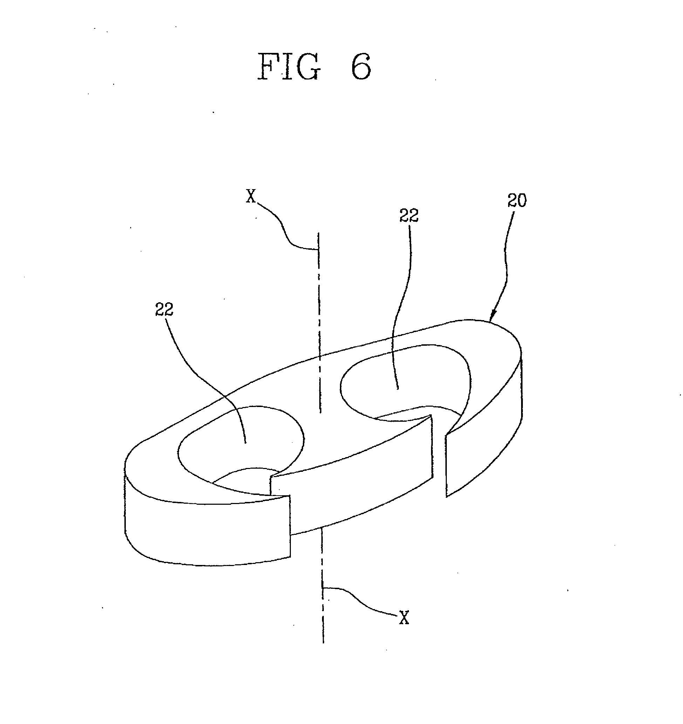

Advantageously, the deformable element 20 further has side cuts 36 each of which is connected to one of the respective passages 22 to enable side insertion of cables 5. As shown in Figs. 5 and 6, each cut 36 extends from a side surface of the deformable element 20 along an arched path as far as the respective passage 22. The concavity of the arched path faces the respective passage 22. The arched path defines two arched surfaces that, when the deformable element 20 is in a closed configuration, are mutually coupled and parallel to the predetermined direction (X-X).

In other words, along a cross-section plane, the deformable element 20 has a central portion with two concave opposite sides and two convex opposite sides. Symmetrically extending from the concave sides are two tailpieces that in said closed configuration of the deformable element 20 (Fig. 5) are turned up against the convex sides for internally delimiting passages 22. In an open configuration of the deformable element 20, shown in Fig. 6, the ends of the tailpieces are spaced apart from the central portion and passages 22 remain laterally open.

In addition, each of the first and second compression elements 19, 21 is defined by two symmetric parts or halves 37 that are mutually coupled in a removable manner, by means of screws for example, along a plane parallel to the predetermined direction "X-X" and intersecting passages 22 for cables 5. Preferably, this plane contains the central axis of said passages 22.

Finally, device 1 in accordance with the second embodiment comprises an auxiliary plate 38 extending at a right angle from a face of the first compression element 19 opposite to the deformable element 20 and suitably shaped, so that it can lock cables 5 against said plate with the aid of clips, for example.

This auxiliary plate 38 has a portion fitted and locked between the two halves 37 of the first compression element 19 and provided with a tailpiece that is bent and inserted between the first compression element 19 and the deformable element 20. Alternatively, this auxiliary plate 38 is locked to device 1 by the same screws 17 pressing and deforming the deformable element 20.

In use, cable 5 to be split is usually formed with an outer sheath 7 wrapping a stiff tensioning element 8, a core of fibre glass for example, and a plurality of smaller cables 5a, each in turn containing a plurality of tubes 6 for optical fibres and possibly a reinforcing braid, not shown.

By the splitting operation, some of the smaller cables 5a are opened to draw tubes 6 out, which tubes will be cut and/or spliced to fibres of other cables, while other smaller cables 5a remain intact and are move through and get out of container 2.

In the non-limiting example shown in Fig. 4, a length of cable 5 containing four smaller cables 5a and a stiff tensioning element 8, is deprived of the outer sheath 7, cables 5a being separated from each other and from the tensioning element 8.

The smaller cables 5a still intact are disposed loop-wise. The two ends of cable 5 still provided with sheath 7 and approached each other are laterally inserted in the side cuts 37 of the open deformable element 20, as shown in Fig. 6, and each of them is located in a respective passage 22. After closing the deformable element 20, the latter is disposed between the first and second compression elements 19, 21 by approaching the halves of each of them on opposite sides of the loop and mounting plate 34, and possibly the auxiliary plate 38, by means of screws 17, taking care not to tighten them.

The stiff tensioning element 8 is cut and the two ends of same are locked in clamps 35 so that cables 5 are axially locked (Fig. 4).

The loop and device 1 are subsequently introduced into the inlet/outlet oval duct 4 of container 2 and device 1 is secured in an integral manner to container 2 by tightening the two screws being part of the coupling means 18 into corresponding holes formed in one of said plates 32 and defining the engagement means 33 (Fig. 1).

Due to stiffness of the stiff element 8 both removal of cables 5 and further insertion of same into container 2 is inhibited.

One of the four cables 5a is opened to extract the tubes 6 of the optical fibres therefrom, which will be cut and/or directed to the boards of container 2.

Then sealing through device 1 takes place, by tightening screws 17 and moving the first compression element 19 close to the second compression element 21, so as to deform the deformable element 20 interposed therebetween.

Radial deformation of the deformable element 20 causes radial bulging of the deformable element 20 which by its outer side surface exerts a sealing action against the inner wall 4a of duct 4 and by the inner surfaces of its passages 22 exerts a sealing action against cables 5. The cap, not shown, is finally sealingly mounted on base 3.

The device in accordance with the invention first of all ensures safe sealing of the inlet/outlet region of the cables of any size.

The device in accordance with the invention ensures axial locking of the cables, avoiding possible damages due to longitudinal movements of the cables themselves.

The device in accordance with the invention further ensures precise and steady positioning of the stripped ends of the cables inside the sealing box and therefore allows safe positioning of the fibres on the boards or other devices dedicated thereto.

The device of the invention is of simple and cheap structure.

By virtue of the device of the invention a quick and easy mounting of the device itself and of the cables in the sealing box is allowed.

In addition, the device made in accordance with the first embodiment allows a great number of cables of reduced sizes to be introduced into the containers and sealed without being obliged to radically change the structure of the container inlets (sealing boxes). In conclusion, the device allows the inlets/outlets of the sealing boxes to be multiplied. In fact, cables of reduced sizes are used in the installation through the blowing technique requiring lightweight cables of reduced sizes, with a reduced protection degree only relying on plastic ducts having a weak resistance to heat. Cables having a reduced number of fibres are also required in the new access networks involving a widespread distribution of the fibres directly at the user's home. Therefore, frequent are the cases in which from a main cable a greater number of cables is derived with a low number of fibres.

The device according to the first embodiment allows axial locking of the small cables, also devoid of stiff tensioning elements.

The device according to the first embodiment also allows new cables to be installed or already existing cables to be dismantled in a quick and easy manner, because, for completing these operations, the device does not need extraction from the duct in which it is inserted but it is sufficient to open the screw closing the deformable element.

The device made in accordance with the second embodiment finally allows easy installation of one or more cables of the loop type and splitting of part of the fibres therefrom.

## Claims

1. A container for optical fibres, comprising:
- a base (3) having at least one inlet/outlet duct (4) for the cables made of optical fibre;
- a cap mounted on the base (3);
- a frame (10) for handling the optical fibres, which is mounted on the base (3) and enclosed in the cap;
- at least one device (1) for sealing cables through the container; said device (1) comprising:
- a support frame (11) extending along a predetermined direction (X-X);
- a first compression element (19) mounted on the support frame (11);
- a second compression element (21) mounted on the support frame (11);
- a deformable element (20) mounted on the support frame (11) between the first and second compression elements (19, 21) and insertable in an inlet/outlet duct (4) of a container (2) for optical fibres; at least one passage (22) for a cable (5) being formed through said first and second compression elements (19, 21) and through said deformable element (20);
the support frame (11) comprising:
- means for moving the first compression element (19) close to the second compression element (21), so as to radially deform the deformable element (20) and obtain a sealing action of the deformable element (20) on an inner wall (4a) of the duct (4) and a sealing action of said deformable element (20) on the cable (5) located in the respective passage (22); and
- coupling means (18) placed at a distal end of the support frame (11) spaced apart from the first compression element (19); wherein the device (1) is rigidly linked to the frame (10) by said coupling means; wherein the support frame (11) further comprises means (27) for locking a tensioning element (8, 9) of said at least one cable (5) to the support frame (11), said locking means being placed at the distal end of the support frame (11).

2. A container as claimed in the preceding claim, wherein the locking means (27) comprises at least one seat (28) aligned with the respective passage (22) along a direction parallel to the predetermined direction (X-X).

3. A container as claimed in claim 1, wherein the device (1) further comprises at least one lug (23) integral with the first compression element (19) and having a retaining surface (24) substantially facing an opening of said passage (22) on said first compression element (19) to prevent further insertion of the cable (5) into the container (2).

4. A container as claimed in claim 1, wherein the device (1) has a plurality of passages (22) for respective cables (5).

5. A container as claimed in claim 1, wherein the means for moving the first compression element (19) close to the second compression element (21) comprises at least one tie-rod (17) passing through the first compression element (19) and the second compression element (21).

6. A container as claimed in claim 1, wherein the support frame (11) comprises a rod (12) passing through the deformable element (20), the first compression element (19) and the second compression element (21).

7. A container as claimed in claim 6, wherein the deformable element (20), first compression element (19) and second compression element (21) are restrained from rotating around the rod (12).

8. A container as claimed in claim 1, wherein the support frame (11) comprises a plate (34) having the distal end carrying the coupling means (18).

9. A container as claimed in claim 1, wherein the first compression element (19) is made up of two halves (37) that can be mutually separated along a plane substantially parallel to the predetermined direction (X-X) and intersecting the passages (22) for the cables (5) and wherein the second compression element (21) is made up of two halves (37) that can be mutually separated along a plane substantially parallel to the predetermined direction (X-X) and intersecting the passages (22) for the cables (5).

10. A container as claimed in claim 1 or anyone of claims 9 or 10, wherein the deformable element (20) has side cuts (36) communicating with the passages (22) for the cables (5), so as to enable lateral access to said passages (22).

11. A container as claimed in anyone of the preceding claims, wherein the device (1) further comprises plugs (31) insertable in a removable manner in the passages (22) for sealing said passages (22) in the absence of the cables (5).

12. A process for sealing cables through a container for optical fibres, **characterised in that** it comprises the following steps:
- inserting a device (1) into an inlet/outlet duct (4) of a container (2) for optical fibres, which device (1) comprises a support frame (11) extending along a predetermined direction (X-X), a first compression element (19) mounted on the support frame (11), a second compression element (21) mounted on the support frame (11) and a deformable element (20) mounted on the support frame (11) between the first and second compression elements (19, 21);
- rigidly securing the device (1) to the container (2) fastening a distal end of the support frame (11) to a frame (10) of the container (2);
- threading an end portion of at least one cable (5) of optical fibre through a respective passage (22) formed through said first and second compression elements (19, 21) and through said deformable element (20) as far as the inside of the container (2);
- stripping said end portion of said cable (5);
- disposing a flexible tensioning element (9) of said cable (5) partly around a lug (23) integral with said first compression element (19) and against a retaining surface (24) belonging to said lug (23) and facing the respective passage (22);
- locking said flexible tensioning element (9) in a seat (28) located at said distal end of the support frame (11);
- moving the first compression element (19) close to the second compression element (21), so as to radially deform the deformable element (20) and obtain the sealing action of the deformable element (20) on an inner wall (4a) of the duct (4) and the sealing action of said deformable element (20) on the cable (5) placed in the respective passage (22).

13. A process for sealing cables through a container for optical fibres, **characterised in that** it comprises the following steps:
- stripping a portion of a cable (5) of optical fibre;
- disposing said portion loop-wise;
- providing a deformable element (20) having two passages (22) and two side cuts (36) communicating with said passages (22);
- opening said cuts (36) so as to laterally accede to the passages (22);
- disposing each of two mutually approached lengths of the cable (5) in the respective passages (22) through the cuts (36);
- closing the cuts (36);
- disposing the deformable element (20) between a first compression element (19) and a second compression element (21) by mounting said compression elements (19, 21) and the deformable element (20) on a support frame (11) so as to form a device (1);
- locking stiff tensioning elements (8) of said cable (5) in respective clamps (35) located at a distal end of the support frame (11);
- inserting the device (1) into an inlet/outlet duct (4) of a container (2) for optical fibres;
- rigidly securing the device (1) to the container (2) by fastening the distal end of the support frame (11) to a frame (10) of the container (2);
- moving the first compression element (19) close to the second compression element (21), so as to radially deform the deformable element (20) and obtain the sealing action of the deformable element (20) on an inner wall (4a) of the duct (4) and the sealing action of said deformable element (20) on the cable (5) located in the two passages (22).

## Patentansprüche

1. Behälter für Glasfaser, umfassend:
- eine Basis (3), aufweisend eine Eingangs-/Ausgangsleitung (4) für die aus Glasfaser bestehenden Kabel;
- eine an der Basis (3) montierte Kappe;
- einen Rahmen (10) zur Handhabung der Glasfaser, der an der Basis (3) montiert und in der Kappe eingeschlossen ist;
- mindestens eine Vorrichtung (1) zum Abdichten von Kabeln durch den Behälter, wobei diese Vorrichtung (1) umfasst:
- einen Halterungsrahmen (11), sich erstreckend entlang einer vorgegebenen Richtung (X-X);
- ein erstes Kompressionselement (19), montiert am Halterungsrahmen (11);
- ein zweites Kompressionselement (21), montiert am Halterungsrahmen (11);
- ein verformbares Element (20), montiert am Halterungsrahmen (11) zwischen dem ersten und dem zweiten Kompressionselement (19, 21) und einsetzbar in eine Eingangs-/Ausgangsleitung (4) eines Behälters (2) für Glasfaser, wobei mindestens ein Durchgang (22) für ein Kabel (5) durch das erste und das zweite Kompressionselement (19, 21) und durch das verformbare Element (20) ausgebildet ist, wobei der Halterungsrahmen (11) umfasst:
- Mittel zum Bewegen des ersten Kompressionselements (19) nahe an das zweite Kompressionselement (21), sodass das verformbare Element (20) radial verformt und eine Abdichtungswirkung des verformbaren Elements (20) an einer internen Wand (4a) der Leitung (4) und eine Abdichtungswirkung des verformbaren Elements (20) am Kabel (5), das sich im jeweiligen Durchgang (22) befindet, erhalten wird, und
- Kupplungsmittel (18), platziert an einem distalen Ende des Halterungsrahmens (11), beabstandet vom ersten Kompressionselement (19), wobei die Vorrichtung (1) steif mit dem Rahmen (10) durch die Kupplungsmittel verbunden ist, wobei der Halterungsrahmen (11) zudem Mittel (27) zum Festspannen eines Spannelements (8, 9) von dem mindestens einen Kabel (5) am Halterungsrahmen (11) umfasst und die Mittel zum Festspannen am distalen Ende des Halterungsrahmens (11) angeordnet sind.

2. Behälter nach dem vorhergehenden Anspruch, wobei die Mittel zum Festspannen (27) mindestens einen Sitz (28) umfassen, der zum jeweiligen Durchgang (22) entlang einer Richtung ausgerichtet ist, die parallel zur vorgegebenen Richtung (X-X) verläuft.

3. Behälter nach Anspruch 1, wobei die Vorrichtung (1) zudem mindestens eine Lasche (23) umfasst, die fest mit dem ersten Kompressionselement (19) verbunden ist und eine Rückhalteoberfläche (24) aufweist, die im Wesentlichen einer Öffnung des Durchgangs (22) auf dem ersten Kompressionselement (19) zugewandt angeordnet ist, um das weitere Einfügen des Kabels (5) in den Behälter (2) zu vermeiden.

4. Behälter nach Anspruch 1, wobei die Vorrichtung (1) eine Vielzahl an Durchgängen (22) für jeweilige Kabel (5) aufweist.

5. Behälter nach Anspruch 1, wobei die Mittel zum Bewegen des ersten Kompressionselements (19) nah an das zweite Kompressionselement (21) mindestens einen Zuganker (17) umfassen, der durch das erste Kompressionselement (19) und das zweite Kompressionselement (21) führt.

6. Behälter nach Anspruch 1, wobei der Halterungsrahmen (11) einen Stab (12) umfasst, führend durch das verformbare Element (20), das erste Kompressionselement (19) und das zweite Kompressionselement (21).

7. Behälter nach Anspruch 6, wobei das verformbare Element (20), das erste Kompressionselement (19) und das zweite Kompressionselement (21) daran gehindert werden, sich um den Stab (12) zu drehen.

8. Behälter nach Anspruch 1, wobei der Halterungsrahmen (11) eine Platte (34) umfasst, aufweisend das distale Ende, das die Kupplungsmittel (18) trägt.

9. Behälter nach Anspruch 1, wobei das erste Kompressionselement (19) aus zwei Hälften (37) besteht, die voneinander entlang einer Ebene, die im Wesentlichen parallel zur vorgegebenen Richtung (X-X) verläuft und die Durchgänge (22) für die Kabel (5) schneidet, getrennt werden können, und wobei das zweite Kompressionselement (21) aus zwei Hälften (37) besteht, die voneinander entlang einer Ebene, die im Wesentlichen parallel zur vorgegebenen Richtung (X-X) verläuft und die Durchgänge (22) für die Kabel (5) schneidet, getrennt werden können.

10. Behälter nach Anspruch 1 oder einem der Ansprüche 9 oder 10, wobei das verformbare Element (20) seitliche Einschnitte (36) aufweist, die mit den Durchgängen (22) für die Kabel (5) kommunizieren, sodass der seitliche Zugang zu diesen Durchgängen (22) ermöglicht wird.

11. Behälter nach einem der vorhergehenden Ansprüche, wobei die Vorrichtung (1) zudem Stopfen (31) umfasst, die auf entfernbare Weise in die Durchgänge (22) eingefügt werden können, um die Durchgänge (22) abzudichten, wenn keine Kabel (5) vorhanden sind.

12. Verfahren zum Abdichten von Kabeln durch einen Behälter für Glasfaser, **dadurch gekennzeichnet, dass** es folgende Schritte umfasst:
- Einfügen einer Vorrichtung (1) in eine Eingangs-/Ausgangsleitung (4) eines Behälters (2) für Glasfaser, wobei diese Vorrichtung (1) einen Halterungsrahmen (11) umfasst, der sich entlang einer vorgegebenen Richtung (X-X) erstreckt, ein erstes Kompressionselement (19), montiert am Halterungsrahmen (11), ein zweites Kompressionselement (21), montiert am Halterungsrahmen (11), und ein verformbares Element (20), montiert am Halterungsrahmen (11) zwischen dem ersten und dem zweiten Kompressionselement (19, 21);
- steifes Befestigen der Vorrichtung (1) am Behälter (2) durch das Fixieren eines distalen Endes des Halterungsrahmens (11) am Rahmen (10) des Behälters (2);
- Einfädeln eines Endabschnitts von mindestens einem Kabel (5) aus Glasfaser durch einen jeweiligen Durchgang (22), ausgebildet durch das erste und das zweite Kompressionselement (19, 21) und durch das verformbare Element (20) bis zum Innenraum des Behälters (2);
- Abziehen des Endabschnitts vom Kabel (5);
- Anordnen eines flexiblen Spannelements (9) des Kabels (5) teilweise rund um eine Lasche (23), die fest mit dem ersten Kompressionselement (19) verbunden ist, und gegen eine Rückhalteoberfläche (24), gehörend zur Lasche (23) und dem jeweiligen Durchgang (22) zugewandt;
- Festspannen des flexiblen Spannelements (9) in einem Sitz (28), befindlich am distalen Ende des Halterungsrahmens (11);
- Bewegen des ersten Kompressionselements (19) nahe an das zweite Kompressionselement (21), sodass das verformbare Element (20) radial verformt und die Abdichtungswirkung des verformbaren Elements (20) an einer internen Wand (4a) der Leitung (4) und die Abdichtungswirkung des verformbaren Elements (20) am Kabel (5), das sich im jeweiligen Durchgang (22) befindet, erhalten wird.

13. Verfahren zum Abdichten von Kabeln durch einen Behälter für Glasfaser, **dadurch gekennzeichnet, dass** es folgende Schritte umfasst:
- Abziehen eines Abschnitts des Kabels (5) aus Glasfaser;
- Anordnen dieses Abschnitts in einer Schlaufenform;
- Bereitstellen eines verformbaren Elements (20), aufweisend zwei Durchgänge (22) und zwei seitliche Einschnitte (36), die mit den Durchgängen (22) kommunizieren;
- Öffnen der Einschnitte (36), sodass der seitliche Zugang zu den Durchgängen (22) ermöglicht wird;
- Anordnen beider der zwei gegenseitig angenäherten Längen des Kabels (5) in den jeweiligen Durchgängen (22) durch die Einschnitte (36);
- Verschließen der Einschnitte (36);
- Anordnen des verformbaren Elements (20) zwischen einem ersten Kompressionselement (19) und einem zweiten Kompressionselement (21) durch das Montieren der Kompressionselemente (19, 21) und des verformbaren Elements (20) an einem Halterungsrahmen (11), um eine Vorrichtung (1) zu formen;
- Festspannen steifer Spannelemente (8) des Kabels (5) in jeweiligen Klemmen (35), befindlich an einem distalen Ende des Halterungsrahmens (11);
- Einfügen der Vorrichtung (1) in eine Eingangs-/Ausgangsleitung (4) des Behälters (2) für Glasfaser;
- steifes Befestigen der Vorrichtung (1) am Behälter (2) durch das Fixieren des distalen Endes des Halterungsrahmens (11) an einem Rahmen (10) des Behälters (2);
- Bewegen des ersten Kompressionselements (19) nahe an das zweite Kompressionselement (21), sodass das verformbare Element (20) radial verformt und die Abdichtungswirkung des verformbaren Elements (20) an einer internen Wand (4a) der Leitung (4) und die Abdichtungswirkung des verformbaren Elements (20) am Kabel (5), das sich in den zwei Durchgängen (22) befindet, erhalten wird.

## Revendications

1. Conteneur pour fibres optiques, comprenant :
- une base (3) ayant au moins un conduit d'entrée/sortie (4) pour les câbles en fibre optique ;
- une coiffe montée sur la base (3) ;
- un châssis (10), destiné à l'acheminement des fibres optiques, étant monté sur la base (3) et enfermé dans la coiffe ;
- au moins un dispositif (1) de scellage de câbles dans le conteneur ; ledit dispositif (1) comprenant :
- un châssis de support (11) se développant le long d'une direction prédéterminée (X-X) ;
- un premier élément de compression (19) monté sur le châssis de support (11) ;
- un second élément de compression (21) monté sur le châssis de support (11) ;
- un élément déformable (20) monté sur le châssis de support (11) entre les premier et second éléments de compression (19, 21) et pouvant s'insérer dans un conduit d'entrée/sortie (4) d'un conteneur (2) pour fibres optiques ; au moins un passage (22), destiné à un câble (5), étant formé dans lesdits premier et second éléments de compression (19, 21) et dans ledit élément déformable (20) ; le châssis de support (11) comprenant :
- un moyen servant à déplacer le premier élément de compression (19) à proximité du second élément de compression (21), de manière à déformer radialement l'élément déformable (20) et à obtenir une action de scellage de l'élément déformable (20) sur une paroi interne (4a) du conduit (4) et une action de scellage dudit élément déformable (20) sur le câble (5) situé dans le passage correspondant (22) ; et
- des moyens d'accouplement (18) placés à une extrémité distale du châssis de support (11) espacés du premier élément de compression (19) ; dans lequel le dispositif (1) est relié rigidement au châssis (10) par lesdits moyens d'accouplement ; dans lequel le châssis de support (11) comprend de plus un moyen (27) destiné à bloquer un élément de tension (8, 9) dudit au moins un câble (5) au châssis de support (11), ledit moyen de blocage étant placé à l'extrémité distale du châssis de support (11).

2. Conteneur selon la revendication précédente, dans lequel le moyen de blocage (27) comprend au moins un siège (28) aligné au passage correspondant (22) le long d'une direction parallèle à la direction prédéterminée (X-X).

3. Conteneur selon la revendication 1, dans lequel le dispositif (1) comprend de plus au moins une oreille (23) solidaire du premier élément de compression (19) et disposant d'une surface de retenue (24) faisant substantiellement face à une ouverture dudit passage (22) sur ledit premier élément de compression (19) pour empêcher toute nouvelle insertion du câble (5) dans le conteneur (2).

4. Conteneur selon la revendication 1, dans lequel le dispositif (1) possède une pluralité de passages (22) pour des câbles respectifs (5).

5. Conteneur selon la revendication 1, dans lequel le moyen destiné à déplacer le premier élément de compression (19) à proximité du second élément de compression (21) comprend au moins un tirant (17) traversant le premier élément de compression (19) et le second élément de compression (21).

6. Conteneur selon la revendication 1, dans lequel le châssis de support (11) comprend une tige (12) traversant l'élément déformable (20), le premier élément de compression (19) et le second élément de compression (21).

7. Conteneur selon la revendication 6, dans lequel l'élément déformable (20), le premier élément de compression (19) et le second élément de compression (21) sont empêchés de tourner autour de la tige (12).

8. Conteneur selon la revendication 1, dans lequel le châssis de support (11) comprend une plaque (34) ayant l'extrémité distale supportant les moyens d'accouplement (18).

9. Conteneur selon la revendication 1, dans lequel le premier élément de compression (19) se compose de deux moitiés (37) pouvant être mutuellement séparées le long d'un plan substantiellement parallèle à la direction prédéterminée (X-X) et croisant les passages (22) pour les câbles (5) et dans lequel le second élément de compression (21) se compose de deux moitiés (37) pouvant être mutuellement séparées le long d'un plan substantiellement parallèle à la direction prédéterminée (X-X) et croisant les passages (22) pour les câbles (5).

10. Conteneur selon la revendication 1 ou selon l'une quelconque des revendications 9 ou 10, dans lequel l'élément déformable (20) possède des découpes latérales (36) communiquant avec les passages (22) pour les câbles (5), de manière à permettre l'accès latéral auxdits passages (22).

11. Conteneur selon l'une quelconque des revendications précédentes, dans lequel le dispositif (1) comprend de plus des bouchons (31) pouvant s'insérer de façon amovible dans les passages (22) pour sceller lesdits passages (22) en l'absence des câbles (5).

12. Procédé de scellage de câbles dans un conteneur pour fibres optiques, **caractérisé en ce qu'**il comprend les étapes suivantes :
- insérer un dispositif (1) dans un conduit d'entrée/sortie (4) d'un conteneur (2) pour fibres optiques, ledit dispositif (1) comprend un châssis de support (11) se développant le long d'une direction prédéterminée (X-X), un premier élément de compression (19) monté sur le châssis de support (11), un second élément de compression (21) monté sur le châssis de support (11) et un élément déformable (20) monté sur le châssis de support (11) entre les premier et second éléments de compression (19, 21) ;
- fixer rigidement le dispositif (1) au conteneur (2) en attachant une extrémité distale du châssis de support (11) à un châssis (10) du conteneur (2) ;
- enfiler une portion d'extrémité d'au moins un câble (5) de fibre optique dans un passage (22) correspondant formé dans lesdits premier et second éléments de compression (19, 21) et dans ledit élément déformable (20) jusqu'à l'intérieur du conteneur (2) ;
- dénuder ladite portion terminale dudit câble (5) ;
- placer un élément de tension flexible (9) dudit câble (5) en partie autour d'un bouchon (23) solidaire dudit premier élément de compression (19) et contre une surface de retenue (24) appartenant au dit bouchon (23) et faisant face au passage correspondant (22) ;
- bloquer ledit élément de tension flexible (9) dans un siège (28) situé au niveau de ladite extrémité distale du châssis de support (11) ;
- déplacer le premier élément de compression (19) à proximité du second élément de compression (21), de manière à déformer radialement l'élément déformable (20) et à obtenir l'action de scellage de l'élément déformable (20) sur une paroi interne (4a) du conduit (4) et l'action de scellage dudit élément déformable (20) sur le câble (5) situé dans le passage correspondant (22).

13. Procédé de scellage de câbles dans un conteneur pour fibres optiques, **caractérisé en ce qu'**il comprend les étapes suivantes :
- dénuder une portion d'un câble (5) de fibre optique ;
- disposer ladite portion en boucle ;
- prévoir un élément déformable (20) disposant de deux passages (22) et de deux découpes latérales (36) communiquant avec lesdits passages (22) ;
- ouvrir lesdites découpes (36) de manière à accéder latéralement aux passages (22) ;
- disposer chacune des deux longueurs mutuellement rapprochées du câble (5) dans les passages respectifs (22) dans les découpes (36) ;
- fermer les découpes (36) ;
- disposer l'élément déformable (20) entre un premier élément de compression (19) et un second élément de compression (21) en montant lesdits éléments de compression (19, 21) et l'élément déformable (20) sur un châssis de support (11) de manière à former un dispositif (1) ;
- bloquer les éléments de tension rigides (8) dudit câble (5) dans des pinces respectives (35) situées à une extrémité distale du châssis de support (11) ;
- insérer le dispositif (1) dans un conduit d'entrée/sortie (4) d'un conteneur (2) pour fibres optiques ;
- fixer rigidement le dispositif (1) au conteneur (2) en attachant l'extrémité distale du châssis de support (11) à un châssis (10) du conteneur (2) ;
- déplacer le premier élément de compression (19) à proximité du second élément de compression (21), de manière à déformer radialement l'élément déformable (20) et à obtenir l'action de scellage de l'élément déformable (20) sur une paroi interne (4a) du conduit (4) et l'action de scellage dudit élément déformable (20) sur le câble (5) situé dans les deux passages (22).
